# EUROPEAN PATENT APPLICATION

(11) **EP 4 836 348 A1**
(43) Date of publication of application: **04.11.2026**
(21) Application number: 25305600.6
(22) Date of filing: 28.04.2025
(51) Int. Cl.: H04L 9/08, H04W 12/041, H04L 9/14

(54) **METHOD FOR GENERATING AN EPHEMERAL PRIMARY AUTHENTICATION KEY, CORRESPONDING SECURE ELEMENT AND UNIFIED DATA MANAGEMENT**

(71) Applicant: THALES DIS FRANCE SAS, 92190 Meudon (FR)
(72) Inventor: DANY, Vincent, 13400 Aubagne (FR); BROSSET, Franck, 560543 Singapore (SG)
(74) Representative: Scheer, Luc

(57) **Abstract**

The invention concerns a method for generating, at a secure element of a UE, User Equipment, or at a UDM, Unified Data Management, of a telecommunication system, a key used for primary authentication, called ephemeral primary authentication key 704, the method comprising applying at least one ephemeral shared key 113, 215 to a first key derivation function 700 for obtaining an ephemeral key 301 used:
- at the UE for encrypting 302 a SUPI, or
- at the UDM for decrypting a SUCI,
the first key derivation function 700 generating also an ephemeral derivation key 701 applied to a second key derivation function 703 for deriving a long-term key 702 for generating the ephemeral primary authentication key 704.

## Description

### FIELD

The present invention concerns telecommunications and more precisely security in mobile networks during the AKA (Authentication and Key Agreement) process. AKA is implemented for ensuring mutual authentication between a network infrastructure of a mobile network operator and a UE (User Equipment), like for example a smartphone, an loT device or a computer. The UE traditionally comprises a secure element being for example a Sim card, a UICC (Universal Integrated Circuit Card), a eUICC (embedded UICC) or an iUICC (integrated UICC).

The invention is linked to the encryption system of Perfect Forward Secrecy (PFS) and proposes a solution ensuring PFS during AKA.

### BACKGROUND

Security of mobile communications essentially relies on a symmetric key K shared by a user equipment (UE) and a home network (HN). For the home network, selecting the right shared key K requires a first step where it unambiguously identifies the UE.

In 3G and 4G networks, the UE sends either its permanent identifier, called IMSI, or a temporary one called TMSI or GUTI to allow such an identification. Ideally, UE would almost exclusively use TMSI but there are several reasons which may lead a TMSI-based identification to fail. In such cases, an alternative procedure consists in requesting the UE to send the IMSI directly. The main problem of this solution is that this backup procedure can easily be triggered by an adversary to trace UE owners.

This family of tracing attacks (usually referred to as "IMSI-catchers") are prevented in 5G networks by the concealment of the UE permanent identifier (called SUbscription Permanent Identifier - SUPI) as defined in 3GPP TS 23.501 and 33.501.

As specified in clause 5.9.2 of 3GPP TS 23.501, a SUPI may contain:
- an IMSI as defined in TS 23.003, or
- a network-specific identifier, used for private networks as defined in TS 22.261.
- a GLI and an operator identifier of the 5GC operator, used for supporting FN-BRGs, as further described in TS 23.316.
- a GCI and an operator identifier of the 5GC operator, used for supporting FN-CRGs and 5G-CRG, as further described in TS 23.316.

The UE does not transmit the SUPI in clear and is concealed to SUCI, a temporary identifier. The UE generates the SUCI and transmits to a UDM (Unified Data Management) for initial registration. Upon receipt of a SUCI, the subscription identifier de-concealing function (SIDF) located at the ARPF/UDM performs de-concealment of the SUPI from the SUCI. Based on the SUPI, the UDM/ARPF chooses the authentication method according to the subscription data.

As specified in clause 6.12.2 of 3GPP TS 33.501, the SUCI is generated using a protection scheme with the Home Network public key. This protection scheme is either the "Elliptic Curve Integrated Encryption Scheme" (ECIES) or one specified by the home network.

The ECIES scheme is specified in a standard, but the Annex C of TS 33.501 introduces some minor modifications. From the cryptographic standpoint, this is a Diffie-Hellman key exchange between the UE (which generates an ephemeral key pair) and the home network (which uses a long-term public key already provisioned on the UE). The Diffie-Hellman key share is then used as an input to a key derivation function to generate an encryption key EK and a MAC key MK.

To better protect messages exchanged between a UE and the network, a so-called PFS concept has been developed.

PFS is also called FS (Forward Secrecy) or PS (Perfect Secrecy) and refers to an encryption system that changes the keys used to encrypt and decrypt information (messages) frequently and automatically. This ongoing process ensures that even if the most recent key is hacked, a minimal amount of sensitive data is exposed.

When considering DH (Diffie-Hellman), it is possible to use different public and private values each time an operation is performed. That means that if an attacker is able to break one message, session key, or even a private key, it does not help in breaking other messages. In other words, each message must be attacked independently. DH enters therefore also in the domain of "perfect forward secrecy".

In current 3GPP architectures, whatever 2G, 3G, 4G or 5G, the primary authentication and key agreement procedures rely on pre-shared key protocols. Compromission of the long-term pre-shared key used in AKA would result in the compromission of an important amount of encrypted communications, including those that an attacker could have recorded long time before the compromission. Introducing forward secrecy would solve this issue.

AKA is the main authentication and key agreement protocol used by 3GPP mobile networks from the third generation and onward. It is based on challenge-response mechanisms and symmetric cryptography. In contrast to its earlier GSM counterparts, AKA provides long key lengths and mutual authentication. A terminal like a smartphone typically executes AKA in a USIM. USIM is technically just an application that can reside on a secure element like a removable UICC, an eUICC, an iUICC, or integrated in a Trusted Execution Environment (TEE). In this description, the terms secure element an USIM are interchangeable.

The goal of AKA is to mutually authenticate a USIM and the so-called home environment, which is the authentication server in the subscriber's home operator's network. This server is called UDM in a 5G telecommunication network.

AKA works in the following manner:
- A UE and a home environment (network) have agreed on a long-term symmetric key beforehand.
- The AKA process starts by having the home environment produce an authentication vector, based on the long-term key and a sequence number. The 5G Home Environment Authentication Vector (5G HE AV) contains a random part RAND, an authenticator part AUTN used for authenticating the network to the USIM, an expected result part XRES* and an anchor key K_{AUSF}.

Thus, 5G HE AV consists of RAND, AUTN, XRES*, and K_{AUSF}.
- The AUSF generates 5G Authentication Vector (5G AV) from the 5G HE AV by computing the HXRES* from XRES* and K_{SEAF} from K_{AUSF}
- RAND, AUTN and HXRES* are passed to the serving network, which uses it to authenticate the device.
- The RAND and the AUTN are delivered to the USIM by the AMF.
- The USIM verifies the AUTN, again based on the long-term key and the sequence number. If this process is successful, the USIM produces an authentication result RES, the ME computes RES* from RES and sends it to the serving network.
- The serving network verifies that RES* matches the expected value in the authentication vector (HXRES*). If it does, the USIM is considered authenticated on serving network point of view, serving network and send RES* to the home network.
- At home network, AUSF compares the received RES* with the stored XRES*. If it matches, the USIM is considered authenticated on home network point of view and AUSF send the K_{SEAF} to the SEAF.
- SEAF will use the K_{SEAF} as an anchor key to derive the keys used to protect further communications between the USIM and the serving network.

In 5G SA telecommunication systems, during this AKA procedure, the UE sends to the home network, or more precisely to the UDM part of the home network, a concealed identifier (SUPI) of the secure element.

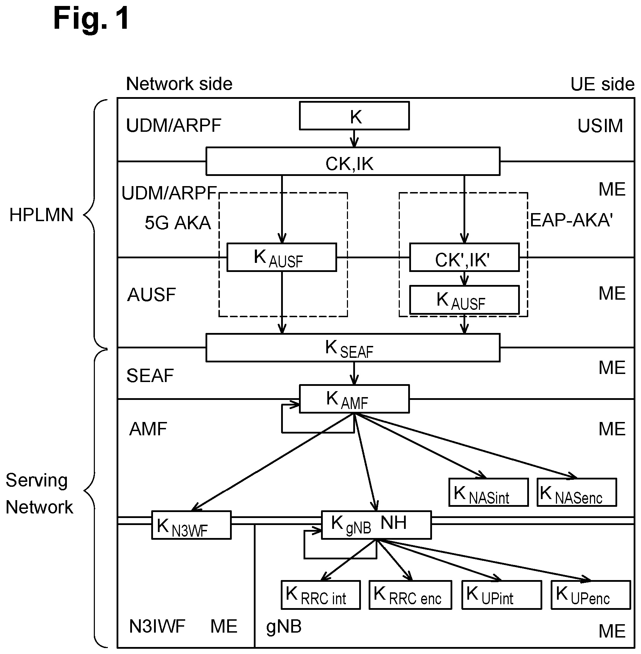

The performance of the secrecy of the exchanges between a UE and the different entities of a network is obtained by using the keys of figure 1 that represents the current key hierarchy, as described for example in ETSI TS 133 501 V17.5.0 "5G; Security architecture and procedures for 5G System", at section 6.2.1.

The main secret key used for deriving successive keys (used for different purposes) is the key K, also called long-term key.

The following describes the keys of the key hierarchy generation in a 5G system in detail.

The keys related to authentication include the following keys: K, CK/IK.

In case of EAP-AKA', the keys CK', IK' are derived from CK and IK. The key hierarchy includes the following keys: K_{AUSF}, K_{SEAF}, K_{AMF}, K_{NASint}, K_{NASenc}, K_{N3IWF}, K_{gNB}, K_{RRCint}, K_{RRCenc}, K_{UPint} and K_{UPenc}.

The keys for the AUSF in the home network are K_{AUSF} and K_{SEAF}.

The key for the AMF in the core network is K_{AMF}.

The keys for NAS signaling are K_{NASint} and K_{NASenc}.

The key for the NG-RAN is K_{gNB}.

The keys for UP traffic are K_{UPenc} and K_{UPint}.

The keys for RRC signaling are K_{RRCint} and K_{RRcenc}.

There are also intermediate keys (NH, K_{NG-RAN}* and K'_{AMF}) and also a key for the non-3GPP access in this figure: K_{N3IWF} (a key derived by the ME and the AMF from K_{AMF}).

Concerning the SUPI, according to TS 23.501, a SUPI is a globally unique 5G identifier allocated to each subscriber in a 5G System and provisioned in the UDM/UDR (Unified Data Management / Unified Data Repository) of the home network of the subscriber.

The SUPI's privacy is specified in TS 33.501. When a UE needs to indicate its SUPI to the network, the UE provides the SUPI in concealed form as defined in TS 23.003.

A concealed SUPI is regarded as a SUCI. The SUCI is a privacy preserving identifier containing the concealed SUPI. It is defined in clause 6.12.2 of 3GPP TS 33.501.

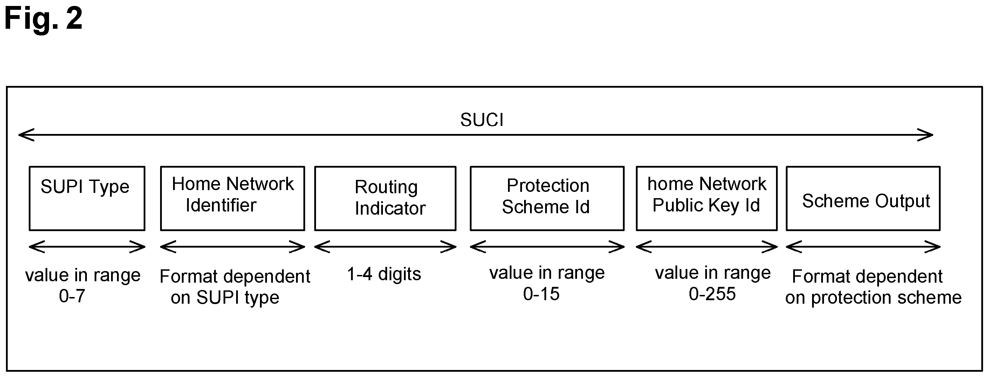

Figure 2 represents the structure of a SUCI.

A SUCI comprises six fields of values:
- a SUPI Type identifying the type of the SUPI concealed in the SUCI;
- a Home Network Identifier identifying the home network of the subscriber. When the SUPI Type is an IMSI, the Home Network Identifier is composed of two parts:
   - a Mobile Country Code identifying the country of domicile of the mobile subscription;
   - a Mobile Network Code identifying the home PLMN of the mobile subscription;
- a Routing Indicator assigned by the home network operator and provisioned in the USIM, that allows together with the Home Network Identifier to route network signaling with SUCI to AUSF and UDM instances capable to serve the subscriber.
- a Protection Scheme Identifier represents a null scheme or a non-null scheme or a protection scheme specified by the HPLMN (Home PLMN).
- a Home Network Public Key Identifier representing a public key provisioned by the HPLMN and used to identify the key used for SUPI protection.
- a Scheme Output representing the output of a public key protection scheme, or the output of a protection scheme specified by the HPLMN.

The invention proposes to strengthen the messages exchanged between a home network and a UE by diversifying the long-term key used by these both entities.

More precisely, the invention proposes to increase the confidentiality of the communication and exchanges between the UE and the different entities of the home and visited networks by introducing forward secrecy thanks to a SUCI providing an improved encryption scheme of a SUPI.

### SUMMARY

The present invention proposes a method for generating, at a secure element of a UE, User Equipment, or at a UDM, Unified Data Management, of a telecommunication system, a key used for primary authentication, called ephemeral primary authentication key, the method comprising applying at least one ephemeral shared key to a first key derivation function for obtaining an ephemeral key used:
- at the UE for encrypting a SUPI, or
- at the UDM for decrypting a SUCI,
the first key derivation function generating also an ephemeral derivation key applied to a second key derivation function for deriving a long-term key for generating the ephemeral primary authentication key.

Preferably, a new ephemeral primary authentication key is computed at each generation of a new SUCI by the secure element.

The ephemeral shared key can be obtained by:
- post quantum cryptography, PQC, or
- ECC based cryptography.

Advantageously, when the ephemeral shared key is obtained by post quantum cryptography, the ephemeral shared key is computed by a Module-Lattice-Based Key-Encapsulation Mechanism.

Preferably, when the UE is not connected anymore to a 5G network but to a non-5G network like a 2G, 3G, 4G or 5G NSA network, the ephemeral primary authentication key is transmitted by the UDM to:
- an AUC (Authentication Center) of a 2G network if the UE is connected to this 2G network;
- a HLR (Home Location Register) of a 3G network if the UE is connected to this 3G network;
- a HSS (Home Subscriber Server) of a 4G or 5G NSA network if the UE is connected to this 4G or 5G NSA network.

The invention also proposes a secure element of a UE, User Equipment, the secure element being configured for generating a key used for primary authentication to a network, called ephemeral primary authentication key, the secure element comprising a first key derivation function for obtaining an ephemeral key used for encrypting a SUPI, the first key derivation function being configured for generating also an ephemeral derivation key applied to a second key derivation function having as input the long-term key of the secure element, the second key derivation function generating the ephemeral primary authentication key.

The secure element is preferably configured to compute a new ephemeral primary authentication key at each generation of a new SUCI by the secure element.

The ephemeral shared key can be:
- a post quantum cryptography key, or
- a ECC based cryptography key.

Advantageously, when the ephemeral shared key is obtained by post quantum cryptography, the ephemeral shared key is computed by a Module-Lattice-Based Key-Encapsulation Mechanism.

The invention also proposes a UDM (Unified Data Management) of a telecommunication network, the UDM being configured for generating a key used by a secure element of a UE, User Equipment, for primary authentication to a network, called ephemeral primary authentication key, the UDM comprising a first key derivation function for obtaining an ephemeral key used for deciphering a SUCI, the first key derivation function being configured for generating also an ephemeral derivation key applied to a second key derivation function having as input the long-term key of the secure element, the second key derivation function generating the ephemeral primary authentication key.

The UDM is preferably configured to compute a new ephemeral primary authentication key at each generation of a new SUCI by the secure element.

In this UDM, the ephemeral shared key is preferably:
- a post quantum cryptography key, or
- a ECC based cryptography key.

Preferably, when the ephemeral shared key is obtained by post quantum cryptography, the ephemeral shared key is computed by a Module-Lattice-Based Key-Encapsulation Mechanism.

Advantageously, when the UE is connected to a non-5G network, the UDM is configured to transmit the ephemeral primary authentication key to:
- an AUC (Authentication Center) of a 2G network if the UE is connected to this 2G network;
- a HLR (Home Location Register) of a 3G network if the UE is connected to this 3G network;
- a HSS (Home Subscriber Server) of a 4G or 5G NSA network if the UE is connected to this 4G or 5G NSA network.

### BRIEF DESCRIPTION OF THE DRAWINGS

The present invention proposes a solution ensuring an improved security scheme thanks to the generation of a SUCI to be sent from a UE to a home network (and a corresponding deciphering mechanism at the UDM) and will be better understood by reading the following description of the figures that represent:
- Figure 1, the current key hierarchy, as described for example in ETSI TS 133 501 V17.5.0;
- Figure 2, the structure of a SUCI;
- Figure 3, the ECIES processing performed at the level of a UE like described in 3GPP TS 33.501 version 17.5.0 Release 17 (Figure C.3.2-1: Encryption based on ECIES at UE);
- Figure 4, the ECIES processing performed at the level of a UDM of the HPLMN communicating with a UE performing the encryption scheme of figure 3, like described in 3GPP TS 33.501 version 17.5.0 Release 17 (Figure C.3.3-1: Decryption based on ECIES at home network);
- Figure 5, a known scheme proposal of SUCI encryption based on a hybrid approach where PQC (Post Quantum Cryptography) key encapsulation is performed in addition to an ECC based key exchange through a Key Derivation Function (KDF);
- Figure 6, a scheme proposal of SUCI decryption based on a hybrid approach where PQC (Post Quantum Cryptography) key decapsulation is performed in addition to an ECC based key exchange through a Key Derivation Function (KDF);
- Figure 7, an evolution of a concealment scheme of a SUPI at a UE according to the invention, in order to improve AKA;
- Figure 8, an evolution of a deconcealment scheme of a SUCI at a UDM of a telecommunication system according to the invention, in order to improve AKA.

### DETAILED DESCRIPTION

Figures 1 and 2 have been described in regard of the state of the art.

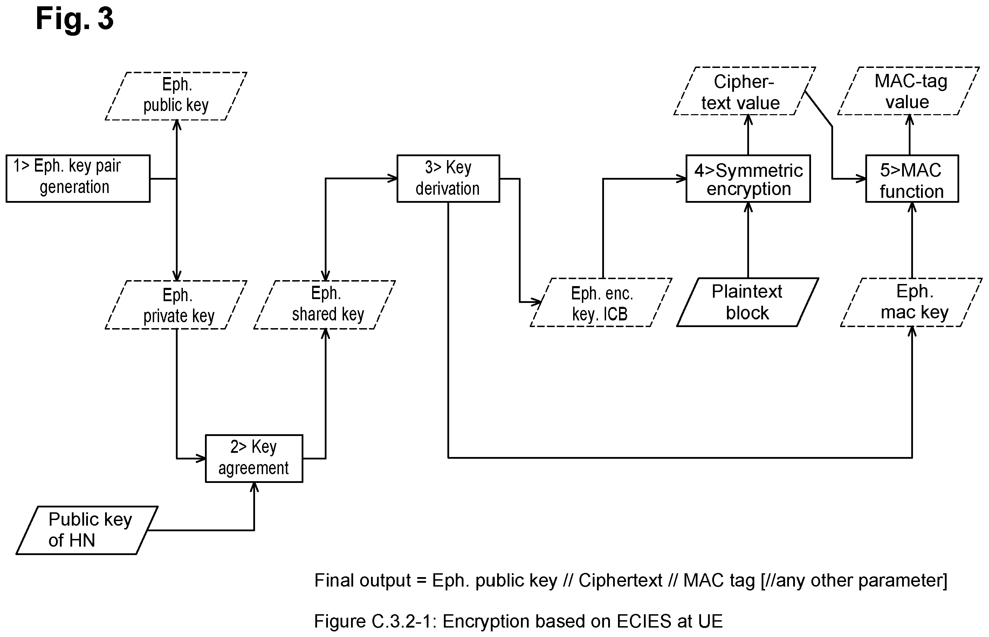

Figure 3 represents the ECIES processing performed at the level of a UE like described in 3GPP TS 33.501 version 17.5.0 Release 17. This figure 3 is a copy of "figure C.3.2-1: Encryption based on ECIES at UE" of this Technical Specification.

ECIES (Elliptic Curve Integrated Encryption Scheme) is a standardized public-key authenticated encryption scheme using a KDF (key-derivation function) for deriving separate MAC key and symmetric encryption key from the ECDH (Elliptic Curve Diffie-Hellman) shared secret. The ECIES standard combines ECC-based asymmetric cryptography with symmetric ciphers to provide data encryption by EC private key and decryption by the corresponding EC public key. The ECIES encryption scheme uses ECC cryptography (public key cryptosystem) + key-derivation function (KDF) + symmetric encryption algorithm + MAC algorithm, combined together.

ECC is the acronym of Elliptic Curve Cryptography. It is a public key encryption algorithm which security is based on the discrete logarithmic problem on elliptic curves, which is considered to be difficult to solve, thus providing a high level of security.

ECDH exchange is mainly used to establish secure shared encryption data in an insecure channel, generally exchanging private keys, which are generally used as "symmetric encryption" keys by both parties for subsequent data transmission.

According to TS 33.501, this ECIES scheme is implemented such that for computing a fresh SUCI, the UE uses the provisioned public key of the home network and freshly generated ECC ephemeral public/private key pair according to the ECIES parameters provisioned by the home network. The processing performed on the UE side generates a final output that is the concatenation of the ECC ephemeral public key, the ciphertext value, the MAC tag value, and other parameters, if for instance to enable the sender to send additional sign indication when point compression is used.

The entities of figure 3 that are not described further as they are known by the state of the art generate at the end a final output equal to:
Ephemeral public key || Ciphertext || MAC tag II Other parameters

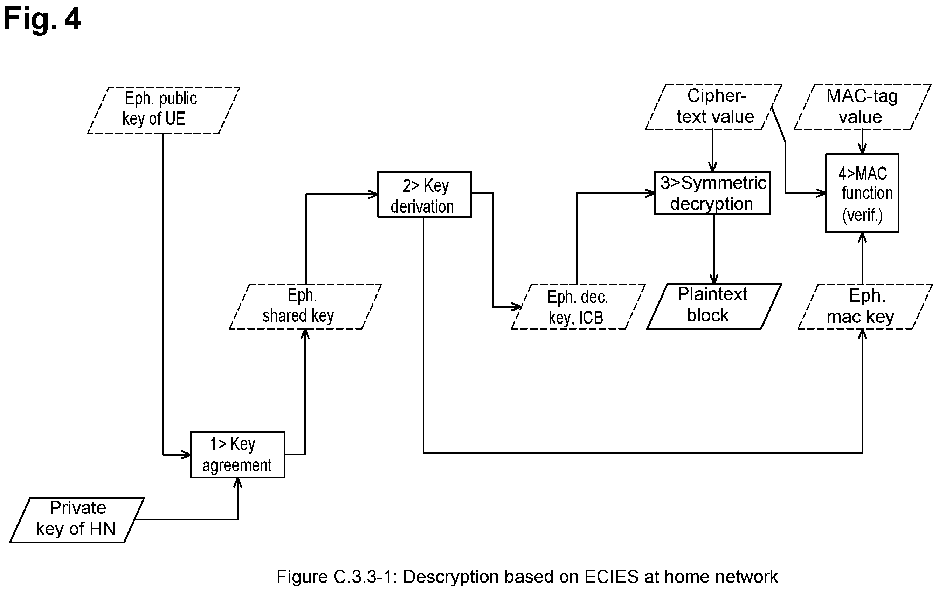

Figure 4 represents the ECIES processing performed at the level of a UDM of the HPLMN communicating with a UE performing the encryption scheme of figure 3, like described in 3GPP TS 33.501 version 17.5.0 Release 17. This figure 4 is a copy of "figure C.3.3-1: Decryption based on ECIES at home network" of this Technical Specification.

According to TS 33.501, the ECIES scheme processing on home network side has the purpose to deconceal a SUPI concealed in a SUCI. The home network uses the received ECC ephemeral public key of the UE and the private key of the home network. Unlike the UE, the home network does not need to perform a fresh ephemeral key pair generation for each decryption.

Figure 4 is not described further as it corresponds to the prior art.

It has been proposed recently a hybrid approach for concealing the SUPI, i.e. for the generation of a SUCI. This approach is disclosed in a GSMA paper (GSMA - Post Quantum Cryptography - Guidelines for Telecom Use Cases, Version 2.0, 04 October 2024).

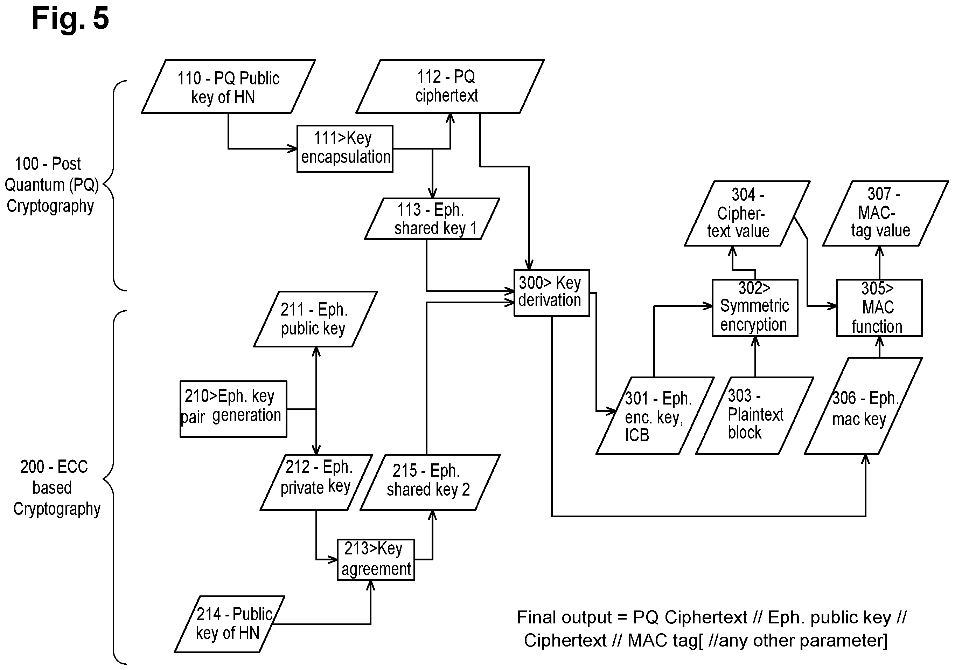

Figure 5 represents a scheme proposal of SUCI generation based on a hybrid approach where PQC (Post Quantum Cryptography) key encapsulation is performed with an ECC based key exchange through a Key Derivation Function (KDF). This scheme is disclosed in the above mentioned GSMA paper.

Concerning post-quantum algorithms, there are a plurality of post-quantum asymmetric key encapsulation mechanisms (KEMs) that constitute appropriate solutions for mainstream cryptographic products such as smartphones for example. A KEM is a set of algorithms that, under certain conditions, can be used by two parties to establish a shared secret key over a public channel. A shared secret key that is securely established using a KEM can then be used with symmetric-key cryptographic algorithms to perform basic tasks in secure communications, such as encryption and authentication.

One of the KEMs is called ML-KEM (based on CRYSTALS-Kyber).

ML-KEM is an algorithm accepting an encapsulation key as input, requires private randomness, and produces a shared secret key and an associated ciphertext as output.

An encapsulation key is a cryptographic key produced by a KEM during key generation and used during the encapsulation process.

ML-KEM is for example described in the following NIST standards:
- https://csrc.nist.gov/projects/post-quantum-cryptography/selected-algorithms, and
- https://csrc.nist.gov/pubs/fips/203/ipd

The security of ML-KEM is related to the computational difficulty of the so-called Module Learning with Errors problem. At present, ML-KEM is believed to be secure even against adversaries who possess a quantum computer.

In figure 5, a PQC key encapsulation is performed and a hybridization with ECC-based key exchange is performed thru Key Derivation Function. This hybridization enhances the security level of the SUCI by providing cipher texts from PQC KEM and classic key agreement as inputs to Key Derivation Function.

This solution has been proposed to allow operators to select their own protection scheme, only the secure element and the UDM having to be modified. This proposal requires no change of the rest of the infrastructure.

In figure 5, Post Quantum (PQ) cryptography elements 100 are provided in addition to ECC based Cryptography elements 200, for encrypting the SUPI. All these operations are performed by the secure element of the UE.

One recognizes some elements of figure 3:
- Block 210 generates an ephemeral key pair, an ephemeral public key 211 and an ephemeral private key 212.
- The ephemeral public key 211 is transmitted to the network (to the UDM) and the ephemeral private key 212 is kept secret in the secure element.
- The ephemeral private key 212 is applied to a key agreement processing unit 213 (as defined in 3GPP TS 33.501, V 17.5.0, C.3.4.0) to which the public key 214 of the home network (HN) is also applied.
- The key agreement processing unit 213 generates an ephemeral shared key 215, noted Ephemeral shared key 2, constituting an entry to a KDF (Key Derivation Function) 300.

Concerning the Post Quantum (PQ) cryptography elements 100, the PQ public key 110 of the home network is an encapsulation key entry of an encapsulation algorithm 111 (KEM) that produces a PQ ciphertext 112 as output and an associated ephemeral shared secret key 113, noted ephemeral shared key 1. The PQ ciphertext 112 is also transmitted to the network (the UDM). The encapsulation algorithm 111 can be based on ML-KEM (Module-Lattice-Based Key-Encapsulation Mechanism). The PQ ciphertext 112 and the shared secret key 113 are also applied to the KDF 300.

The KDF 300 generates with these inputs an ephemeral encoding key 301 accompanied by an ICB (Initial Counter Block), and an ephemeral mac key 306.

The ephemeral encoding key 301 and the ICB are further applied to a symmetric encryption algorithm 302 receiving as an input the plaintext block 303 to be encrypted. This plaintext block 303 corresponds to the SUPI to be encrypted. The symmetric encryption algorithm 302 generates therefrom a cipher-text value 304 that is applied to a MAC function 305 receiving as another entry the ephemeral mac key 306 for generating a MAC-tag value 307.

The entities of figure 5 generate at the end a final output equal to:
PQ Ciphertext 112 || Ephemeral public key 211 || Ciphertext 304 || MAC tag 307and any other parameter to be transmitted to the home network.

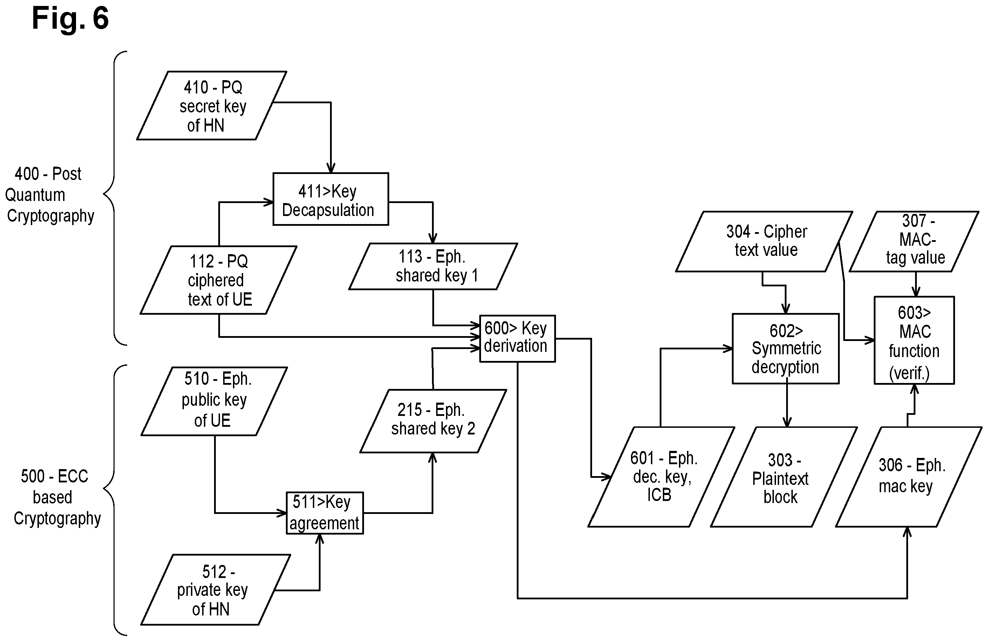

Figure 6 represents the complement of figure 5, i.e a scheme proposal for decryption of a SUCI encrypted according to figure 5.

For clarity reasons, in figure 6, the elements, entities or keys represented in figure 5 have the same references.

In this figure 6, the Post Quantum (PQ) cryptography elements are referenced 400 and the ECC based cryptography elements are referenced 500.

Their function is to decrypt the received SUCI. All these operations are performed by the UDM (UDM/UDR) of the home network.

As said before, the UDM receives the following entry:
PQ Ciphertext 112 || Ephemeral public key 211 || Ciphertext 304 || MAC tag 307

For the PQ part 400, the PQ secret key 410 of the home network, constituting a decapsulation key, is applied to a decapsulation algorithm 411 receiving as a second entry the PQ ciphered text 112 of the UE. The decapsulation algorithm 411 produces the ephemeral shared key 113 of figure 5, noted ephemeral shared key 1. This key 113 is applied to a KDF entity 600.

The ECC (or ECIES) scheme is implemented such that for deconcealing a SUCI, the home network uses the received ECC ephemeral public key 510 of the UE and the private key 512 of the home network. The processing on home network side is performed according to the decryption operation defined in: SECG SEC 1: Recommended Elliptic Curve Cryptography, Version 2.0, 2009.

Unlike the UE, the home network does not need to perform a fresh ephemeral key pair generation for each decryption.

After a processing by a key agreement processing unit 511 (as defined in 3GPP TS 33.501, V 17.5.0, C.3.4.0), an ephemeral shared key 215 is issued, noted ephemeral shared key 2, and applied to the KDF entity 600.

This KDF entity 600 generates here two keys: An ephemeral deciphering key 601 with an ICB and an ephemeral mac key 306. The ephemeral deciphering key 601 is applied to a deciphering algorithm 602 receiving the ciphertext 304 to reconstitute the plaintext 303 of figure 5. The received ciphertext 304 is also en entry of a verification function 603 that compares the ephemeral mac key 306 with the MAC tag 307 and verifies the integrity of the received ciphertext value 304.

The invention proposes to improve this concealment/deconcealment scheme by adding a new parameter permitting to diversify all the keys represented in figures 5 and 6.

The invention proposes to increase the confidentiality of the communication and exchanges between the UE and the different entities of the home and visited networks by introducing forward secrecy thanks to a SUCI providing an improved encryption scheme of a SUPI.

In this respect, the invention proposes to add to the known schemes (ECC-based and/or PQC-based) a new derived ephemeral key used for mutual authentication.

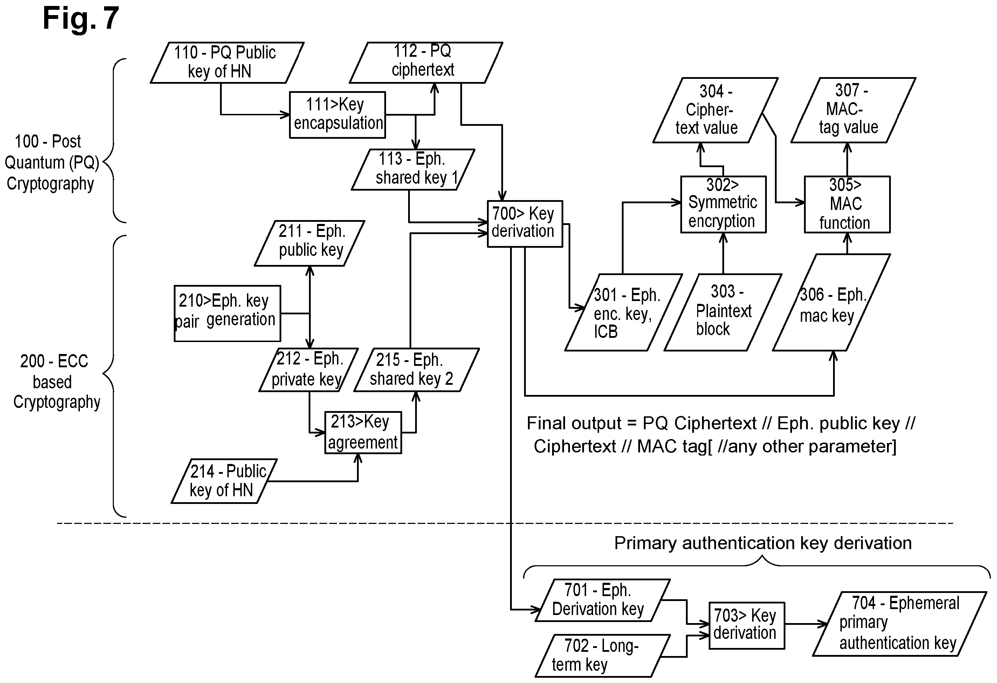

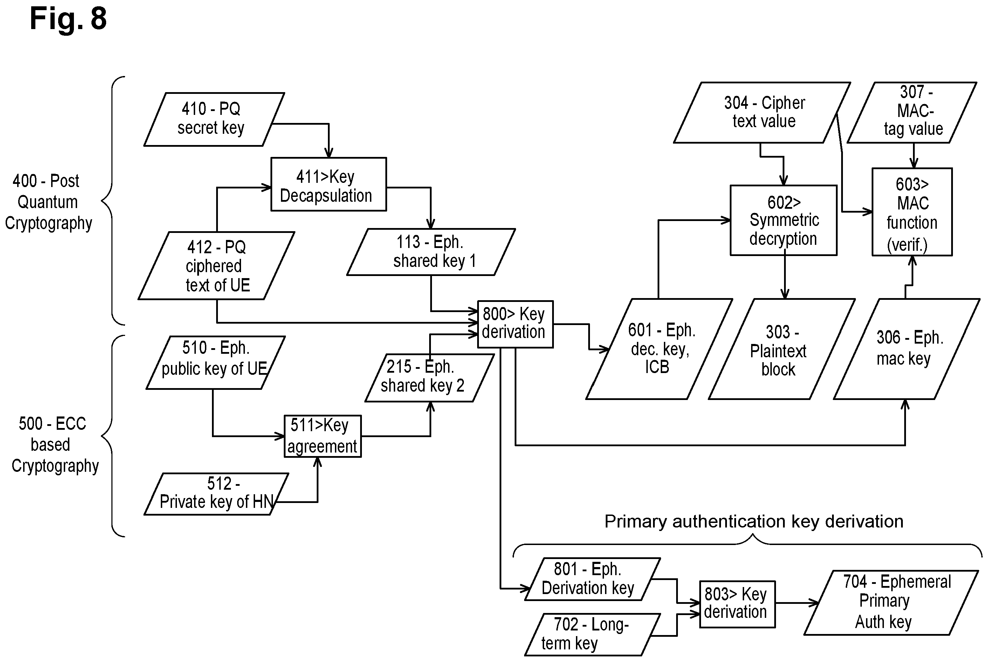

This key is referenced 701 in figures 7 and 8.

More precisely, figure 7 shows an evolution of a concealment scheme of a SUPI (at a UE of a telecommunication system) according to the invention, in order to improve AKA.

The KDF 300 of figure 5 (referenced 700 in figure 7 and hereinafter called "first key derivation function") does not only derive an ephemeral shared key 113 or 215 (respectively ephemeral shared key 1 or ephemeral shared key 2) for obtaining ephemeral keys 301 and 306, but also for obtaining an ephemeral derivation key 701. This ephemeral derivation key 701 is then used to obtain a key 704 used for primary authentication, this key being called "ephemeral primary authentication key".

In the prior art, such a primary authentication is based on the long-term shared secret key called K in 3G, 4G and 5G networks, and called Ki in 2G networks. This ephemeral primary authentication key corresponds to the key K of figure 1 and is here used for further primary authentication and derived keys generation.

In this respect, the first key derivation function 700 generates, in addition to the known ephemeral encoding key 301 and the ephemeral mac key 306, an ephemeral derivation key 701. This ephemeral derivation key 701 is applied to a KDF 703, called second key derivation function. The ephemeral derivation key 701 has for example a length of 32 bytes. The second key derivation function 703 receives as a second input the long-term key 702 of the secure element and has the function to derive this long-term key 702 by the generated ephemeral derived key 701.

The result of this derivation is a new ephemeral primary authentication key 704 that replaces, for the primary authentication and derived keys generation, the long-term key 702 of the secure element (noted K in figure 1).

The derivation of the primary authentication key K (replaced by the ephemeral primary authentication key 704) has as a consequence that all keys derived from the ephemeral primary authentication key 704 have forward secrecy property since this ephemeral primary authentication key 704 replaces key K of figure 1.

As an example, keys CK and IK (for 5G AKA) and CK', IK' (for EAP-AKA') are diversified since they become ephemeral. This implies that keys K_{AUSF}, K_{SEAF}, K_{AMF} and all other keys derived from these keys will be diversified (the whole key hierarchy is impacted, including K_{NASint}, K_{NASenc}, K_{N3IWF}, K_{gNB}, K_{RRCint}, K_{RRCenc}, K_{UPint} and K_{UPenc}).

A new ephemeral primary authentication key 704 is preferably computed at each generation of a new SUCI by the secure element at the UE side. The result is that all keys of figure 1 are changed for each new computation of a SUCI.

It has to be noted that first derivation function 700 can receive as an input the ephemeral shared key 1 and/or the ephemeral shared key 2. This means that the ephemeral shared key can be obtained by post quantum cryptography (ephemeral shared key 1, referenced 113) or by ECC based cryptography (ephemeral shared key 2, referenced 215).

Today, only ECC cryptography is used but it is expected that at middle-term, both technologies ECC and PQC will be used in conjunction (hybrid solution of figure 5). In a further future, it is foreseen that PQC will entirely replace the traditional crypto scheme and ECC will not be used anymore. This means that with the proposed invention, PQC will be used alone (references 110-113) along with the proposed improvement of the invention (long-term key derivation, references 701-704). Computations performed by blocks 210-215 will no longer exist).

In terms of sent information, this represents, for the UE that the final output would be equal to:
PQ Ciphertext 112 || Ciphertext 304 || MAC tag 307

On the network side, a complementary deconcealment scheme is proposed and represented in figure 8.

Figure 8 represents an evolution of a deconcealment scheme of a SUCI at a UDM of a telecommunication system according to the invention, in order to improve AKA.

In this figure 8, a deconcealment scheme (at a UDM of a telecommunication system) of the SUCI according to the invention is represented. This scheme is in fact performed at the level of the SIDF (Subscription Identifier De-concealing Function) linked to the UDM. The SIDF is a functional element of the UDM, responsible for decrypting a SUCI to reveal the subscriber's SUPI. The long-term key(s) used for authentication and security association setup purposes have to be protected from physical attacks and never leave the secure environment of the UDM/ARPF unprotected. Therefore, the security mechanisms for storage of subscription credentials are in the UDR (Unified Data Repository).

The KDF 600 of figure 6 (now referenced 800 in figure 8 and hereinafter also called first key derivation function), does not only derive an ephemeral shared key 113 or 215 (ephemeral shared key 1 or ephemeral shared key 2) for obtaining an ephemeral (deciphering) key 601, but also for obtaining an ephemeral derivation key 801. This ephemeral derivation key 801 is then used to obtain a key 704 used for primary authentication, also called ephemeral primary authentication key. As previously, such an ephemeral primary authentication key is used for primary authentication in replacement to the long-term shared secret key (called K in 3G, 4G and 5G networks, and called Ki in 2G networks).

In this respect, the first key derivation function 800 generates, in addition to the ephemeral deciphering key 601, an ephemeral derivation key 801 that is applied to a KDF 803, called second key derivation function (as for the encryption scheme of figure 7). This ephemeral derivation key 801 has for example also a length of 32 bytes. The second key derivation function 803 receives as a second input the long-term key 702 stored at the home network (in its UDM/UDR) and has the function to derive this long-term key 702 by the generated ephemeral key 801.

The result of this derivation is the new ephemeral primary authentication key 704 (identical to the same referenced key of figure 7) that replaces, for the primary authentication, the long-term key 702 stored at the UDM/UDR (noted K in figure 1). The UE and the home network have therefore stored an anchor key corresponding, for confidentiality and integrity purposes, to a new identical long-term key.

When a new ephemeral primary authentication key 704 is computed at each generation of a new SUCI at the UE side, the home network performs the same, i.e. computes a new primary authentication key 704.

Here also, the first derivation function 800 can receive as an input the ephemeral shared key 1 and/or the ephemeral shared key 2, depending on the keys used at the UE.

The key derivations functions 703 and 803 have for example as parameters:
- FC = 0xF0
- P0 = SUCI Ephemeral Auth key
- L0 = Length of P0
- The input key is the long-term key

To summarize, the method of the invention proposes to:
- Combine a PQC SUCI and a USIM symmetric-based AKA authentication during each SUCI generation, at key derivation step (step 700), a new ephemeral derivation key 701, 801 being generated in addition to the other usual ones (301 and 306);
- The ephemeral primary authentication key 704 is derived from the long-term key K. This ephemeral primary authentication key 704 is used for the AKA authentication at each primary authentication, the ephemeral primary authentication key 704 being used instead of long-term key K.

The invention also applies to the solution described in EP-3,110,189 A1 disclosing a method of replacing at least one authentication parameter for authenticating a security element co-operating with a terminal, the authentication parameter enabling an authentication system of a mobile network to authenticate the secure element, the mobile network being operated by a mobile network operator, the method comprising:
A - Having an entity store in the secure element a first authentication parameter;
B - Having this entity transmit to the mobile network operator the first authentication parameter so that the operator can record it in its authentication system for authenticating the secure element;
C - On occurrence of an event, having a remote platform transmit to the secure element an indicator informing the secure element that it is authorized to replace the first authentication parameter with a second authentication parameter if its authentication fails with the authentication system the next time it attempts to connect to the mobile network;
D - On occurrence of the event, having the entity transmit to the operator a second authentication parameter so as to enable the operator to replace the first authentication parameter by the second authentication parameter in its authentication system;
E - In the event of subsequent failure of the secure element to connect to the mobile network and if the indicator is present at the secure element, replacing the first authentication parameter with the second authentication parameter at the secure element so that the secure element can authenticate itself with the mobile network by means of the second authentication parameter.

The invention applies to 5G SA (Stand Alone) and next telecommunication network generations (6G,...).

When considering a user connected to a 5G NSA (Non-Stand Alone), 3G or 4G telecommunication network, no SUCI is generated. In this case (5G NSA, 3G or 4G), there are solutions to ensure that the proposed improvement can be implemented:
- Either the MNO is able to synchronize its different core networks and propagate the ephemeral primary authentication key from 5G core to the other cores, in such case 5G NSA, 3G or 4G will benefit of new forward secrecy thanks to the re-used of ephemeral primary authentication key (but with less frequent renewal), or
- The ephemeral primary authentication key is only used when connected to 5G SA which is detected by the secure element thanks to a dedicated Authentication Management Field (AMF) bit, but in such case 5G NSA, 3G or 4G will benefit of new forward secrecy.

Thus, after having computed a long-term key (ephemeral primary authentication key 704) according to the invention in a 5G SA network, this key is transmitted by the UDM to:
- an AUC (Authentication Center) of a 2G network if the **UE** is connected to this 2G network;
- a HLR (Home Location Register) of a 3G network if the **UE** is connected to this 3G network;
- a HSS (Home Subscriber Server) of a 4G or 5G NSA network if the UE is connected to this 4G or 5G NSA network.

In all cases, the primary authentication key is only computed according to the invention when the UE is connected to a 5G SA network.

The invention also concerns a secure element of a User Equipment, this secure element being configured for generating a key used for primary authentication to a network, this key being called ephemeral primary authentication key 704.

The secure element comprises a first key derivation function 700 for obtaining an ephemeral key 301 used for encrypting the SUPI, the first key derivation function 700 being configured for generating also an ephemeral derivation key 701 applied to a second key derivation function 703 having as input the long-term key 702 of the secure element. The second key derivation function 703 generates the ephemeral primary authentication key 704.

The secure element is preferably configured to compute a new ephemeral primary authentication key 704 at each generation of a new SUCI by this secure element.

As said before, the ephemeral shared key 113, 215 is:
- a post quantum cryptography key, or
- a ECC based cryptography key.

And also preferably, when the ephemeral shared key 113 is obtained by post quantum cryptography, this ephemeral shared key 113 is computed by a Module-Lattice-Based Key-Encapsulation Mechanism 111.

The invention also concerns a UDM, Unified Data Management, of a telecommunication network, the UDM being configured for generating a key used by a secure element of a UE for primary authentication to a network. This key is called ephemeral primary authentication key 704. The UDM comprises a first key derivation function 800 for obtaining an ephemeral key 601 used for deciphering (602) a SUCI, the first key derivation function 800 being configured for generating also an ephemeral derivation key 801 applied to a second key derivation function 803 having as input the long-term key 702 of the secure element, the second key derivation function 803 generating the ephemeral primary authentication key 704.

Preferably, the UDM is configured to compute a new ephemeral primary authentication key 704 at each generation of a new SUCI by the secure element.
As before, in the UDM, the ephemeral shared key 113, 215 is preferably:
- a post quantum cryptography key (400), or
- a ECC based cryptography key (500).

When, in the UDM, the ephemeral shared key 113 is obtained by post quantum cryptography, the ephemeral shared key 113 is advantageously computed by a Module-Lattice-Based Key-Encapsulation Mechanism 111.

The UDM of the invention is preferably configured, when the UE is connected to a non-5G network, to transmit the ephemeral primary authentication key 704 to:
- an AUC Authentication Center of a 2G network if the UE is connected to this 2G network;
- a HLR Home Location Register of a 3G network if the UE is connected to this 3G network;
- a HSS Home Subscriber Server of a 4G or 5G NSA network if the UE is connected to this 4G or 5G NSA network.

The hybrid approach proposed by the invention leverages the strengths of both ECC and PQC. Specifically:
- Resistance to Quantum Attacks: ML-KEM provides resistance against attacks from quantum computers, ensuring that even if ECC is compromised, the SUPI remains protected.
- Resistance to Classical Attacks: The ECC component provides security against classical attacks.
- Forward Secrecy: By incorporating ephemeral keys, the hybrid approach ensures that past communications remain secure even if long-term keys are compromised.

## Claims

1. A method for generating, at a secure element of a UE, User Equipment, or at a UDM, Unified Data Management, of a telecommunication system, a key used for primary authentication, called ephemeral primary authentication key (704), said method comprising applying at least one ephemeral shared key (113, 215) to a first key derivation function (700, 800) for obtaining an ephemeral key (301, 601) used:
- at said UE for encrypting (302) a SUPI, or
- at said UDM for decrypting (602) a SUCI,
said first key derivation function (700, 800) generating also an ephemeral derivation key (701, 801) applied to a second key derivation function (703, 803) for deriving a long-term key (702) for generating said ephemeral primary authentication key (704).

2. The method according to claim 1 wherein a new ephemeral primary authentication key (704) is computed at each generation of a new SUCI by said secure element.

3. The method according to claim 1 or 2 wherein said ephemeral shared key (113, 215) is obtained by:
- post quantum cryptography (100), PQC, or
- ECC based cryptography (200).

4. The method according to 3 wherein, when said ephemeral shared key (113) is obtained by post quantum cryptography, said ephemeral shared key (113) is computed by a Module-Lattice-Based Key-Encapsulation Mechanism (111).

5. The method according to one of the claims 1 to 4, wherein, when said UE is connected to a non-5G network, said ephemeral primary authentication key (704) is transmitted by said UDM to:
- an AUC (Authentication Center) of a 2G network if said UE is connected to this 2G network;
- a HLR (Home Location Register) of a 3G network if said UE is connected to this 3G network;
- a HSS (Home Subscriber Server) of a 4G or 5G NSA network if said UE is connected to this 4G or 5G NSA network.

6. A secure element of a UE, User Equipment, said secure element being configured for generating a key used for primary authentication to a network, called ephemeral primary authentication key (704), said secure element comprising a first key derivation function (700) for obtaining an ephemeral key (301) used for encrypting (302) a SUPI, said first key derivation function (700) being configured for generating also an ephemeral derivation key (701) applied to a second key derivation function (703) having as input the long-term key (702) of said secure element, said second key derivation function (703) generating said ephemeral primary authentication key (704).

7. A secure element according to claim 6, wherein said secure element is configured to compute a new ephemeral primary authentication key (704) at each generation of a new SUCI by said secure element.

8. A secure element according to claim 6 or 7, wherein said ephemeral shared key (113, 215) is:
- a post quantum cryptography key (100), or
- a ECC based cryptography key (200).

9. A secure element according to any of the claims 6 to 8, wherein, when said ephemeral shared key (113) is obtained by post quantum cryptography, said ephemeral shared key (113) is computed by a Module-Lattice-Based Key-Encapsulation Mechanism (111).

10. A UDM (Unified Data Management) of a telecommunication network, said UDM being configured for generating a key used by a secure element of a UE, User Equipment, for primary authentication to a network, called ephemeral primary authentication key (704), said UDM comprising a first key derivation function (800) for obtaining an ephemeral key (601) used for deciphering (602) a SUCI, said first key derivation function (800) being configured for generating also an ephemeral derivation key (801) applied to a second key derivation function (803) having as input the long-term key (702) of said secure element, said second key derivation function (803) generating said ephemeral primary authentication key (704).

11. A UDM according to claim 10, wherein said UDM is configured to compute a new ephemeral primary authentication key (704) at each generation of a new SUCI by said secure element.

12. A UDM according to claim 10 or 11, wherein said ephemeral shared key (113, 215) is:
- a post quantum cryptography key (400), or
- a ECC based cryptography key (500).

13. A UDM according to any of the claims 10 to 12, wherein, when said ephemeral shared key (113) is obtained by post quantum cryptography, said ephemeral shared key (113) is computed by a Module-Lattice-Based Key-Encapsulation Mechanism (111).

14. A UDM according to any of the claims 10 to 13, wherein, when said UE is connected to a non-5G network, said UDM is configured to transmit said ephemeral primary authentication key (704) to:
- an AUC (Authentication Center) of a 2G network if said UE is connected to this 2G network;
- a HLR (Home Location Register) of a 3G network if said UE is connected to this 3G network;
- a HSS (Home Subscriber Server) of a 4G or 5G NSA network if said UE is connected to this 4G or 5G NSA network.
